# EUROPÄISCHE PATENTSCHRIFT

(11) **EP 2 766 574 B1**
(45) Veröffentlichungstag und Bekanntmachung des Hinweises auf die Patenterteilung: **09.05.2018**
(21) Anmeldenummer: 12783499.2
(22) Anmeldetag: 05.10.2012
(51) Int. Cl.: E21D 11/10, E21D 11/38, E21D 11/08, E04B 1/41

(54) **HALTERUNG ZUM EINGIESSEN IN EIN BETONELEMENT**
HOLDER FOR CASTING INTO A CONCRETE ELEMENT
ÉLÉMENT DE RETENUE DESTINÉ À ÊTRE COULÉ DANS UN ÉLÉMENT EN BÉTON

(30) Priorität: 12.10.2011 DE 102011115715
(43) Veröffentlichungstag der Anmeldung: 20.08.2014
(73) Patentinhaber: Meese GmbH, 51467 Bergisch Gladbach (DE)
(72) Erfinder: MEESE, Ludwig, 51467 Bergisch Gladbach (DE)
(74) Vertreter: Carstensen, Lars
(86) Internationale Anmeldenummer: PCT/EP2012/004177
(87) Internationale Veröffentlichungsnummer: WO 2013/053452

(56) Entgegenhaltungen:
- DE-A1- 3 931 369
- DE-U1- 20 111 550
- JP-A- 2001 107 446
- JP-A- 2010 261 295

## Beschreibung

Die Erfindung betrifft eine Halterung, insbesondere zur Befestigung einer Auskleidung, zum zumindest teilweisen Eingießen in ein unter Verwendung einer Schalung gegossenes Betonelement, wobei die Halterung mit einer Außenfläche auf die zu der Schalung weisenden Oberfläche des Betonelements ausgerichtet ist, insbesondere zur Anwendung im Tunnelbau und Ingenieurbau, wobei eine Befestigungsvorrichtung zur lösbaren Befestigung der Halterung an der Schalung vorgesehen ist, wobei die Befestigungsvorrichtung ein mit der Schalung zusammenwirkendes Halteteil und ein an der Außenfläche der Halterung angeordnetes Klemmelement aufweist und wobei das Klemmelement mit dem Halteteil zusammenwirkt. Weiterhin betrifft die Erfindung ein Betonelement, das mit einer solchen Halterung versehen ist.

Eine derartige Halterung mit einer Befestigungsvorrichtung ist aus der JP 2010 261 295 A bekannt. Die Befestigungsvorrichtung weist ein Halteteil auf, das einen pilzförmigen, an einer Schalung befestigbaren, Grundkörper aufweist, der einstückig mit einem zylinderförmigen Schaft ausgestaltet ist. Auf den Schaft ist ein Hohlzylinder einer Halterung, die in Beton eingegossen werden soll, aufsteckbar. Der Hohlzylinder ist einstückig mit der Halterung ausgebildet oder über ein Verbindungsstück mit der Halterung verbunden. Der Hohlzylinder hält ausschließlich über eine kraftschlüssige Verbindung an dem zylinderförmigen Schaft. Um die kraftschlüssige Verbindung zu verbessern, kann an dem Grundkörper ein den zugewandten Endbereich des Schaftes und des aufgesetzten Hohlzylinders umfassender Ringabschnitt vorhanden sein. Auch der Ringabschnitt wirkt ausschließlich kraftschlüssig mit dem Hohlzylinder zusammen.

Eine weitere Halterung ist aus der DE 39 31 369 A1 bekannt. Diese Halterung weist eine Einstecköffnung oder eine Einschrauböffnung für korrespondierende Rondelle auf. Die Halterung wird in nicht bekannter Weise an einer Schalung positioniert und mit Beton umgossen. Nach dem Entfernen der Schalung wird eine Rondelle an der Halterung befestigt und an der Rondelle wird in geeigneter Weise eine Auskleidung befestigt, beispielsweise angeschweißt.

Der Erfindung liegt die Aufgabe zugrunde, eine Halterung zum Eingießen in ein Betonelement bereitzustellen, die zur Vorbereitung und während des Betoniervorgangs einfach handhabbar ist und unter deren Verwendung eine Auskleidung einfach an dem Betonelement befestigbar ist.

Diese Aufgabe wird dadurch gelöst, dass das Klemmelement als eine in den Haltekörper eingelassene Hinterschneidung ausgebildet ist, mit der das Klemmelement auf das an der Schalung befestigte Halteteil geklemmt wird. Diese Befestigung ist bei der Vorbereitung des Betoniervorgangs einfach durchzuführen und bei dem Entschalungsvorgang kann der Haltekörper leicht von der Schalung gelöst werden. Dieser Ausgestaltung liegt folgende Erkenntnis zugrunde. Während beim bekannten Stand der Technik unzureichende Angaben gemacht sind, wie die entsprechenden Halterungen an der Schalung positioniert und befestigt werden, ist bei der erfindungsgemäßen Halterung eine Befestigungsvorrichtung vorgesehen, mit der die Halterung zur Vorbereitung des Betoniervorgangs einfach und zuverlässig an der Schalung festgelegt werden kann. Auch während des Betoniervorgangs hält die so festgelegte Halterung zuverlässig an der Schalung, wobei nach dem Betoniervorgang die Schalung problemlos von dem Betonelement und der nunmehr in das Betonelement eingegossenen Halterung entfernt werden kann. Dadurch wird eine deutliche Reduzierung des Arbeitsaufwandes und auch später des Montageaufwandes erreicht. Beispielsweise können mehrere Halterungen in vorgegebenen Abständen an dem Schalelement befestigt werden und eingegossen werden. Dadurch sind klar definierte Befestigungsstellen geschaffen, die beim anschließenden Befestigen der Verkleidung einfach geortet werden können. Dadurch wird die Befestigung einer Auskleidung an dem Betonelement insgesamt vereinfacht. Dadurch, dass die Befestigungsvorrichtung ein mit der Schalung zusammenwirkendes Halteteil und ein an der Außenfläche der Halterung angeordnetes Klemmelement aufweist, wobei das Klemmelement mit dem Halteteil zusammenwirkt, ist die so ausgebildete Befestigungsvorrichtung einfach handhabbar.

In einer weiteren Ausgestaltung der Erfindung ist das Halteteil ein Magnet, der bevorzugt zusammen mit dem Haltekörper an der aus einem Eisenmaterial gefertigten Schalung positioniert wird. Bei dem Entschalungsvorgang wird dann der Haltekörper zusammen mit dem Magneten von der Schalung gelöst der Magnet kann zur weiteren Verwendung aus dem Haltekörper entfernt werden. Falls der Magnet dagegen bei dem Entschalungsvorgang an der Schalung verbleibt, kann er von der Schalung entfernt werden oder aber für den nächsten Betoniervorgang wird ein neuer Haltekörper an dem Magneten befestigt.

In Weiterbildung der Erfindung ist das Halteteil ein Schalungsknopf und der Schalungsknopf ist mittels eines Haltestifts an der Schalung befestigbar. Dabei ist in den Schalungsknopf bevorzugt eine zentrale Öffnung eingearbeitet, durch die der Haltestift durchführbar ist. Der Haltestift ist wie auch der Schalungsknopf bevorzugt aus einem metallischen Werkstoff gefertigt und kann beispielsweise bei einer aus Holz gefertigten Schalung einfach in diese eingetrieben werden. Es ist aber auch denkbar, den aus einem metallischen Werkstoff gefertigten Haltestift in eine aus Metall gefertigte Schalung einzutreiben. Im Rahmen der Erfindung ist es auch möglich, dass der Haltestift einstückig mit dem Schalungsknopf ausgebildet ist, wobei dann die so vorgefertigte Baueinheit an der Schalung montiert wird.

Eine weitere Ausführungsform der Erfindung sieht vor, den Schalungsknopf an der Schalung festzukleben oder anzuschweißen. Ein festgeklebter Schalungsknopf kann für eine neue Ausrichtung der Positionierung wieder von der Schalung gelöst werden, während ein an einer aus einem metallischen Werkstoff gefertigten Schalung festgeschweißter ebenfalls aus einem metallischen Werkstoff gefertigter Schalungsknopf vorzugsweise dauerhaft an der Schalung verbleibt. Bei einem neuen Schalvorgang wird dann auf den Schalungsknopf eine neue Halterung aufgesteckt. Bei einem Nichtgebrauch kann der Halteknopf von einer Kappe abgedeckt werden, sodass er nicht von Beton verunreinigt wird. Wird er bei einem Nichtgebrauch nicht abgedeckt, kann eventuell anhaftender Beton beispielsweise mit einem Hochdruckreiniger einfach entfernt werden. Wird der Schalungsknopf nicht mehr benötigt, kann er mit einem Trennwerkzeug von der Schalung entfernt werden.

In Weiterbildung der Erfindung kann das Halteteil als ein Kolben ausgebildet sein, der in einem in die Schalung eingelassenen Zylinder bewegbar eingesetzt ist. Soll eine Halterung an dem Kolben, der ansonsten wie ein Schalungsknopf ausgebildet ist, befestigt werden, wird der Kolben beispielsweise hydraulisch oder pneumatisch betätigt soweit aus der Schalung ausgefahren, dass das Klemmelement der Halterung an dem Kolben befestigt werden kann. Bei Nichtgebrauch kann der Kolben dann vollständig in den Zylinder zur Bildung einer glatten Schaloberfläche in die Schalung eingefahren werden.

In einer alternativen Ausführungsform ist die Befestigungsvorrichtung ein mit der Halterung zusammenwirkender Saugnapf. Dabei ist die Halterung vorzugsweise so ausgebildet, dass diese gleichzeitig den Saugnapf bildet. Beispielsweise kann die Halterung aus einem gummiartigen Material gefertigt sein, und somit einfach auf der sauberen Oberfläche der Schalung befestigt werden.

In Weiterbildung der Erfindung weist die Halterung einen pilzförmigen Grundkörper und einen mit dem Grundkörper zusammenwirkenden Hohlklemmkörper auf. Dieser zumindest zweiteilige Aufbau der Halterung ermöglicht eine einfache Fertigung. Dabei sind der Grundkörper und der Holklemmkörper bevorzugt aus einem Kunststoffmaterial in einem Spritzgießverfahren gefertigt.

In weiterer Ausgestaltung der Erfindung ist der Hohlklemmkörper als ein einen Hohlraum bildenden Träger mit zumindest einem, vorzugsweise zwei, in dem Hohlraum des Trägers angeordneten Klemmbügel(n) ausgebildet. Der Träger ist beispielsweise zylinderförmig oder rechteckig ausgebildet und wird in eine entsprechende Ausnehmung beziehungsweise in den Innenraum des Grundkörpers eingesetzt. Der Träger wird zusammen mit den Klemmbügeln als ein Bauteil beispielsweise im Kunststoffspritzgießverfahren hergestellt. Zur leichteren Herstellbarkeit kann der Träger auf der betonseitigen Außenseite von einer separat gefertigten Abdeckkappe abgedeckt sein, wobei die Abdeckkappe das Eindringen von Beton in den Hohlraum beziehungsweise in den Innenraum verhindert.

In einer anderen Ausführungsform sind vorzugsweise zwei Klemmbügel einstückig mit einer Grundplatte des Hohlklemmkörpers ausgebildet und die Klemmbügel sind zu der Grundplatte verschwenkbar. Der so gefertigte Holklemmkörper kann einfach montiert werden, indem die Klemmbügel unter Bildung des Hohlraums des Hohlklemmkörpers verschwenkt werden und dann anschließend der so gebildete Hohlklemmkörper zumindest teilweise in eine beispielsweise rechteckige oder zylinderförmige Ausnehmung beziehungsweise in den Innenraum des pilzförmigen Grundkörpers einsetzt wird. Dabei können der Hohlklemmkörper und der Grundkörper zusätzlich miteinander verklebt oder verklemmt werden. Die Grundplatte ragt seitlich über die zylinderförmige Ausnehmung hinaus und gewährleistet somit einen festen Halt in dem Beton.

In Weiterbildung der Erfindung ist nach dem Entschalungsvorgang durch die Außenfläche hindurch ein Halter in den Hohlraum einsetzbar ist. Dabei ist wiederum in weiterer Ausgestaltung der Halter ein mit einer Rondelle zusammenwirkender Dübel. Der Dübel kann einstückig mit der Rondelle beispielsweise aus einem Kunststoffmaterial gefertigt sein. Die Außenfläche bildet mit einem Außenbereich das Klemmelement und mit einem Innenbereich eine schalungsseitige Abdeckung des Hohlraums. Der Dübel wird durch den Innenbereich der Außenfläche durchgestoßen und in den Hohlraum zur Verklemmung mit den Klemmbügeln eingeführt.

In weiterer Ausgestaltung der Erfindung ist ein Betonelement zur Anwendung im Tunnelbau oder Ingenieurbau vorgesehen, wobei das Betonelement unter Verwendung von zumindest einer Schalung gegossen wird, wobei eine Halterung nach einem der vorherigen Ansprüche vor dem Betoniervorgang an dem Schalelement lösbar befestigt ist.

Ein Verfahren zum Befestigen von einer Auskleidung an der Oberfläche von einem Betonelement sieht folgende Schritte vor:
a) Bereitstellen von einem Betonelement mit einer an zumindest einer Befestigungsstelle in das Betonelement oberflächenbündig einbetonierten Halterung
b) Befestigung von einer Rondelle an der Halterung mittels eines Halters
c) Befestigung der Auskleidung an der Rondelle.

Dabei kann die Auskleidung an der Rondelle in herkömmlicher Weise festgeklebt oder festgeschweißt werden. Bevorzugt ist die Rondelle aber mit einer Krallenbefestigung versehen, die bei dem Befestigungsvorgang der Auskleidung an der Rondelle in eine an der Auskleidung betonelementseitig angebrachte Vliesschicht eindringt. Dabei ist die Rondelle mehrteilig mit zumindest einem Bodenteil und einem Deckel so ausgebildet, dass während eines Andrückvorgangs der Auskleidung an die Rondelle Krallen durch Ausnehmungen in dem Deckel der Rondelle lageverändernd austreten und in die Vliesschicht eindringen. Um ein Lösen der Verbindung zu verhindern, ist vorgesehen, dass der Deckel und das Bodenteil in der angedrückten Endstellung miteinander verriegelt sind.

In weiterer Ausgestaltung sind die Bauteile (Halterung mit Grundkörper und Holklemmkörper, Rondelle sowie Halteteil) aus einem Kunststoffwerkstoff, beispielsweise PVC, ABS, PE, VLDPE, TPO, FPO, Polyamid, oder Polykarbonat gefertigt. Besonders ABS ist schlagzäh und lässt sich darüber hinaus gut verarbeiten. Selbstverständlich sind die Bauteile, insbesondere die Krallen, auch aus metallischem Werkstoff wie Stahl oder Aluminium herstellbar.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: einen Querschnitt durch eine erfindungsgemäße in Beton eingegossene Halterung, die an einer Schalung befestigt ist,
- Fig. 2: einen weiteren Querschnitt durch eine in Beton ein gegossene Halterung gemäß Figur 1 mit einem Dübel zum Einsetzen in einen Hohlraum der Halterung,
- Fig. 3: einen Querschnitt durch ein zweites Ausführungsbeispiel einer in Beton eingegossenen Halterung, die an einer Schalung befestigt ist,
- Fig. 4: einen Querschnitt gemäß Figur 3 mit entfernter Schalung und einen Dübel zum Einsetzen in einen Hohlraum der Halterung,
- Fig. 5: ein Querschnitt durch ein drittes Ausführungsbeispiel einer in Beton eingegossenen Halterung, die an einer Schalung befestigt ist,
- Fig. 6: eine Seitenansicht eines weiteren Ausführungsbeispiels einer Halterung,
- Fig. 6a: eine Schnittdarstellung von Figur 6,
- Fig. 6b: eine Draufsicht auf Figur 6,
- Fig. 6c: eine Schnittdarstellung eines gegenüber Figur 6a abgewandelten Ausführungsbeispiels einer Halterung,
- Fig. 7: eine Seitenansicht eines weiteren Ausführungsbeispiels einer Halterung,
- Fig. 7a: eine Schnittdarstellung von Figur 7 und
- Fig. 7b: eine Draufsicht auf Figur 7.

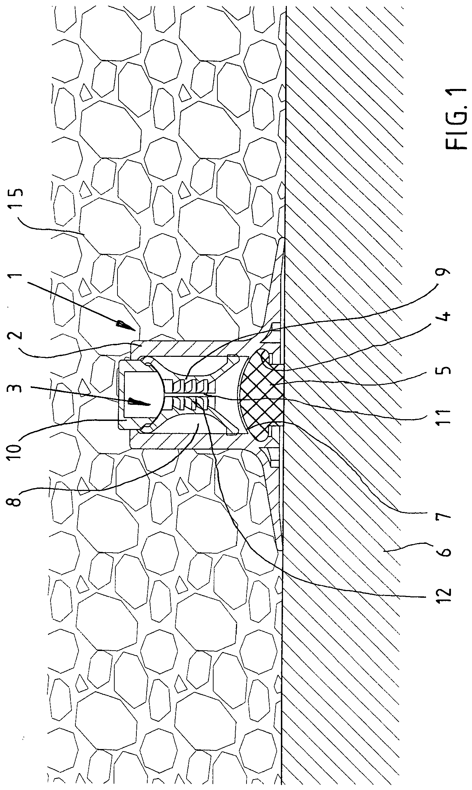

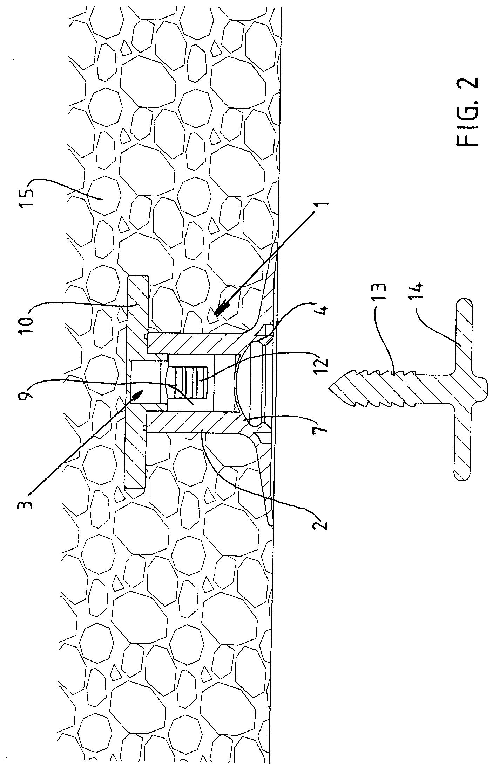

In Figur 1 ist eine gemäß einer ersten Ausführungsform ausgestaltete Halterung 1 in einem ersten Querschnitt dargestellt. Die Halterung 1 weist einen pilzförmigen Grundkörper 2 und einen mit dem Grundkörper 2 zusammenwirkenden Hohlklemmkörper 3 auf. Die Halterung 1 ist über ein als Hinterschneidung 4 ausgebildetes Klemmelement an einem Schalungsknopf 5 befestigt, wobei der Schalungsknopf 5 an einer Schalung 6 befestigt, insbesondere festgeschweißt ist. Der Schalungsknopf 5 und das als Hinterschneidung 4 ausgebildete Klemmelement bilden eine Befestigungsvorrichtung für die Halterung 1 an der Schalung 6. Die Halterung 1 weist eine zu der Schalung 6 ausgerichtete Außenfläche 7 auf, die mit einem Außenbereich das Klemmelement und mit einem Innenbereich eine schalungsseitige Abdeckung eines Innenraums 8 der Halterung 1 bildet. In den Innenraum 8 ist der Hohlklemmkörper 3 eingesetzt, der aus einer Grundplatte 10 und zwei Klemmbügeln 9 besteht, die einstückig mit einer Grundplatte 10 beispielsweise als Kunststoffspritzgießteil gefertigt sind. Die Klemmbügel 9 sind in dem dargestellten montierten Zustand zu der Grundplatte 10 zur Bildung eines Hohlraums 11 verschwenkt und werden in einem nicht dargestellten aufgeklappten Zustand hergestellt. Die Klemmbügel 9 weisen Widerhacken 12 auf, die mit einer entsprechenden Profilierung 13 eines als Dübel 14 ausgebildeten Halters (Figur 2) zusammenwirken, wenn der Dübel 14 mit dem die Profilierung 13 tragenden Schaftteil in den Hohlraum 11 eingeführt beziehungsweise eingedrückt wird. Dabei durchstößt der Dübel 14 mit der Spitze des Schaftteils den Innenbereich der Außenfläche 7 und wird bei der weiteren Eindrückbewegung in den Hohlraum 11 zur Verklemmung der Profilierung 13 mit den Widerhaken 12 eingeführt.

Die Schalung 6 ist beispielsweise als eine aus einem Metallwerkstoff, insbesondere Eisen gefertigte Tübbingschale für den Tunnelbau ausgelegt. Nachdem die Halterung 1 an der Schalung 6 mittels der an dem Schalungsknopf 5 festgeklemmten Hinterschneidung 4 befestigt worden ist, kann die Schalung 6 beispielsweise in einem Stollen positioniert werden und der Beton zwischen der Stollenoberfläche und der Schalung 6 zur Bildung eines Betonelements 15 eingebracht werden.

Nach dem Entfernen der Schalung 6 wird mit dem Dübel 14 (Figur 2) eine Rondelle an der in das Betonelement 15 eingegossenen Halterung 1 befestigt. Es versteht sich von selbst, dass je nach Größe und Ausgestaltung der Schalung 6 eine beliebige Anzahl von Halterungen 1 erfindungsgemäß an der Schalung 6 befestigt und anschließend in das Betonelement 15 eingegossen werden können. An der Rondelle beziehungsweise den Rondellen wird insbesondere zu Abdichtzwecken eine Auskleidung beispielsweise in Form einer Folie befestigt. Diese Befestigung kann beliebig erfolgen. Beispielsweise kann die Folie mit einem geeigneten Kleber an der Rondelle festgeklebt werden, wobei der Kleber auf die Rondelle aufgetragen wird oder ein Klebepad auf der Rondelle aufgeklebt ist. Weiterhin ist eine Befestigung der mit einer Vliesschicht versehenen Folie mittels einer Klettvorrichtung, die auf der Rondelle befestigt oder sonst wie aufgebracht ist (Extrusionsklett), möglich. Die Rondelle kann aber auch mit einer Krallenbefestigungsvorichtung versehen sein, wobei dann die Krallen während des Befestigungsvorgangs der Auskleidung in eine Vliesschicht der mit einer solchen Vliesschicht kaschierten Folie eindringen. Die Rondelle weist hierbei eine Grundplatte auf, mit der ein Deckel zusammenwirkt. Der Deckel ist mit seinem äußeren Rand um ein definiertes Maß auf den äußeren Umfang der Grundplatte aufgesetzt. Diese Grundposition wird beispielsweise durch eine (umlaufende) oder mehrere Nut-Feder-Verbindung(en) temporär festgelegt. In dem von der Grundplatte und dem Deckel gebildeten Innenraum sind die Krallen in definierten Stellungen durch die entsprechende Ausgestaltung der zu dem Innenraum weisenden Flächen der Grundplatte und des Deckels gehalten. In der Grundposition sind die Krallen, die jeweils Greifer und einen Verschwenkmechanismus aufweisen, fast komplett innerhalb des Innenraums angeordnet, während die Krallen in der Halteposition mit ihren Greifern zumindest weitgehend aus dem Deckel herausragen, während der Verschwenkmechanismus weiterhin vollständig in dem Innenraum liegt. Der Verschwenkmechanismus wirkt mit den entsprechenden Flächen der Grundplatte und des Deckels so zusammen, dass während des Andrückens des Deckels an die Grundplatte der Verschwenkmechanismus die Greifer verschwenkt, die dabei durch Öffnungen in Form von Schlitzen in dem Deckel ausfahren. Dadurch dringen die Krallen beziehungsweise deren Greifer sicher in die Vliesschicht ein, ohne dass diese in irgendeiner Form verschoben wird. Sie sind in der Halteposition so in der Vliesschicht verkrallt, dass die Vliesschicht sich auch bei beispielsweise einer Zugbelastung nicht mehr lösen kann. Der Deckel ist in der Halteposition mit der Grundplatte mittels beispielsweise einer Nut-Feder-Verbindung dauerhaft (im Unterschied zu der Grundposition) festgelegt beziehungsweise verriegelt.

Figur 2 zeigt einen um 90° gedrehten Querschnitt durch die in Beton ein gegossene Halterung 1 gemäß Figur 1 mit dem darunter angeordneten Dübel 14 zum Einsetzen in den Hohlraum 11 der Halterung 1. Im Unterschied zu der Darstellung der Figur 1 ist hier erkennbar, dass die Grundplatte 10 des Hohlklemmkörpers 3 zwei sich seitlich über den Grundkörper 2 erstreckende Arme aufweist und somit von Beton umgossen fest in dem Betonelement 15 verankert ist. Da die Klemmbügel 9 im schalungsseitigen Endbereich zu dem Innenraum 8 des Grundkörpers 2 aufgebogen sind und zusätzlich in eine Nut des Grundkörpers 2 eingreifen können, ist ein festes, nicht trennbares Zusammenwirken des Hohlklemmkörpers 3 und des Grundkörpers 2 in dem Betonelement 15 sichergestellt.

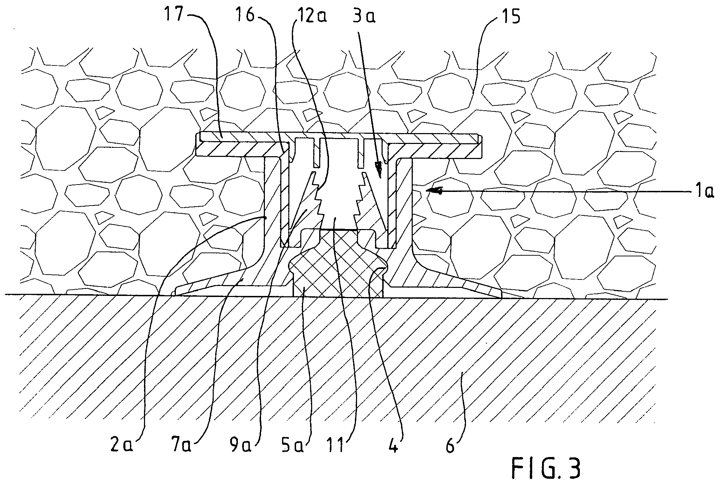

Figur 3 zeigt einen Querschnitt durch ein zweites Ausführungsbeispiel einer in ein Betonelement eingegossenen Halterung 1a, die an einer Schalung 6 befestigt ist. Bei diesem Ausführungsbeispiel ist der Schalungsknopf 5a etwas höher als in dem ersten Ausführungsbeispiel ausgebildet. Insbesondere aber weist der Hohlklemmkörper 3a einen Träger 16 auf, wobei in den Träger 16 zwei Klemmbügel 9a eingelassen sind. Die Klemmbügel 9a weisen die dargestellte Form nach der Art eines Kabelbindervorschusses mit Widerhacken 12a auf und die Klemmbügel 9a sind einstückig mit dem Träger 16 gefertigt. Der Träger 16 ist beispielsweise zylinderförmig oder rechteckig ausgebildet und wird in den Innenraum 8a des Grundkörpers 2a eingesetzt und gegebenenfalls zusätzlich durch eine Nut-Feder-Verbindung in dem Grundkörper 2a festgesetzt. Der Träger 16 wird zusammen mit den Klemmbügeln 9a als ein Bauteil beispielsweise in einem Kunststoffspritzgießverfahren hergestellt. Zur leichteren Herstellbarkeit wird der Träger 16 auf der betonseitigen Außenseite von einer separat gefertigten Abdeckkappe 17 abgedeckt, wobei die Abdeckkappe 17 das Eindringen von Beton in den Hohlraum 11a verhindert.

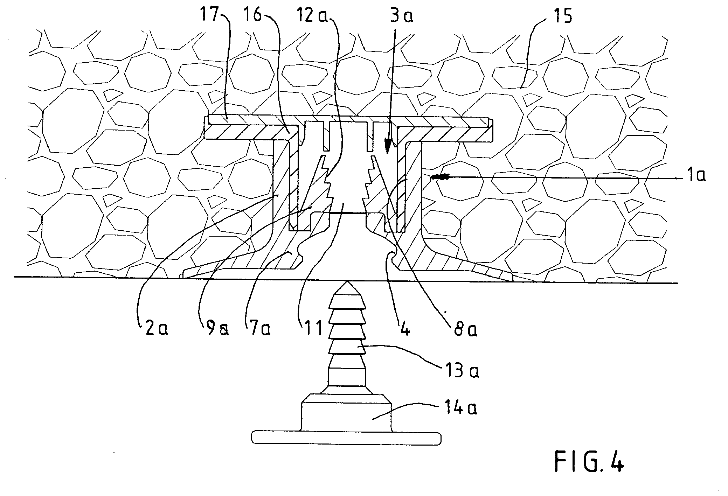

Figur 4 zeigt den gleichen Querschnitt durch die Halterung 1a gemäß Figur 3, aber mit entfernter Schalung 6 und einen unter der Halterung 1a angeordneten Dübel 14a mit einer Profilierung 13a zum Einsetzen in den Hohlraum 12a der Halterung 1a.

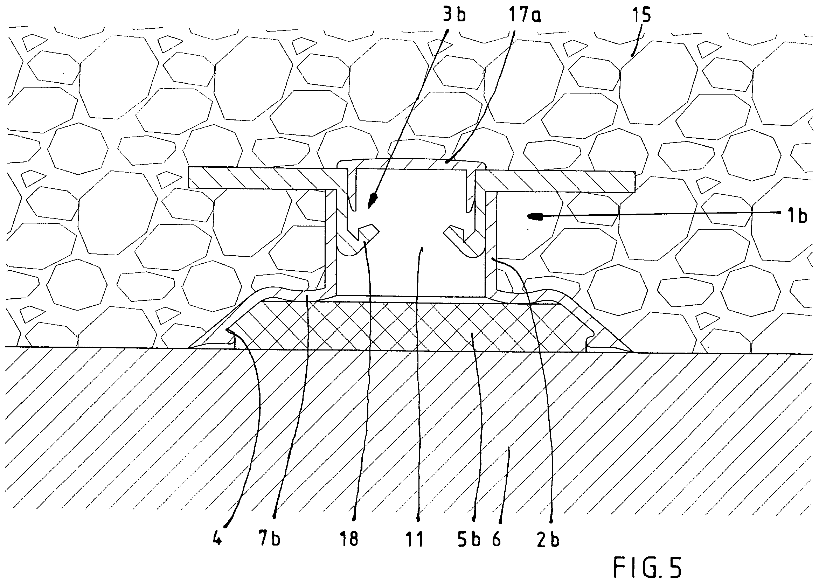

Figur 5 zeigt einen Querschnitt durch ein drittes Ausführungsbeispiel einer in Beton eingegossenen Halterung 1b, die an einer Schalung 6 befestigt ist. Bei diesem Ausführungsbeispiel ist der Schalungsknopf 5b flach und die Außenfläche 7b des Grundkörpers 2b ist entsprechend angepasst ausgebildet. Der Hohlklemmkörper 3b ist in der dargestellten Form ausgebildet und weist einen ringförmigen Absatz 18 auf, an dem sich die Profilierung eines Dübels festklemmt. Insbesondere bei diesem Ausführungsbeispiel kann der Dübel auch einen einfedernden Hinterschnitt aufweisen, der sich an dem ringförmigen Absatz 18 nach dem einschieben des Dübels festsetzt. Auch hier ist der Hohlraum 11 des Hohlklemmkörpers 9b von einer Abdeckkappe 17a auf der Seite des Betonelements 15abgedeckt.

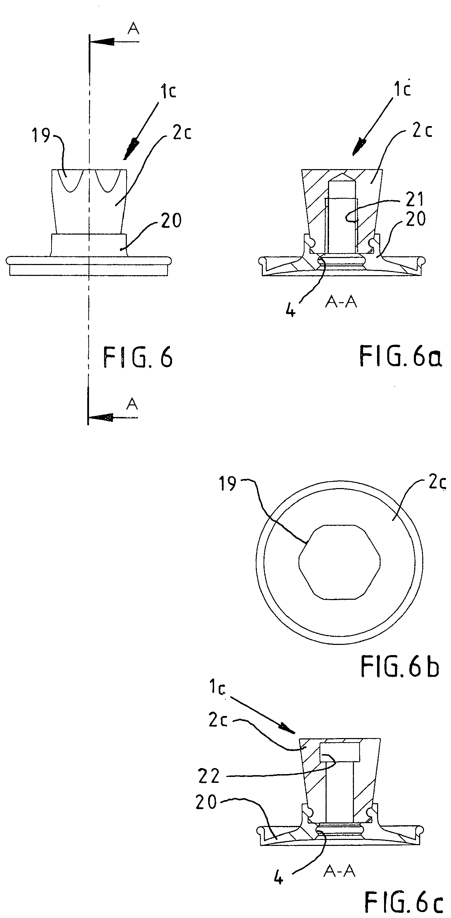

Figur 6 zeigt ein weiteres Ausführungsbeispiel einer Halterung 1c. Bei diesem Ausführungsbeispiel ist der Grundkörper 2c beispielsweise aus einem metallischen Werkstoff gefertigt und mit einem Fußteil 20 verbunden, das das die Hinterschneidung 4 aufweisende Klemmelement darstellt, mit dem der Grundkörper 2c an einem hier nicht dargestellten Schalungsknopf 5, 5a, 5b befestigt wird. Das Fußteil 20 ist aus einem elastischen Material, beispielsweise Gummi oder auch aus einem elastischen Kunststoff gefertigt und mit dem Grundkörper 2c fest verbunden. Der Grundkörper 2c ist kegelabschnittsförmig ausgebildet und weist endseitige Abflachungen 19 auf, die sicherstellt, dass die in Beton eingegossene Halterung 1c bei einer auf die Halterung 1c ausgeübten Drehbewegung unverrückbar in dem Beton festgehalten ist.

Ausweislich der Schnittdarstellung gemäß Figur 6a weist der Grundkörper 2c eine Ausnehmung, beispielsweise in Form einer Bohrung, auf, in die ein Gewinde 21 eingearbeitet ist. In dieses Gewinde 21 ist als Halter anstelle eines Dübels 14, 14a eine Schraube eindrehbar, mit der beispielsweise eine Rondelle oder ein sonstiges Trägerbauteil an der Halterung 1c befestigbar ist.

Figur 6b zeigt eine Draufsicht auf die Halterung 1c, aus der die einseitigen Abflachungen 19 deutlich ersichtlich sind.

Das Ausführungsbeispiel gemäß Figur 6d ist leicht abgewandelt zu dem Ausführungsbeispiel, das in den Figuren 6 bis 6c dargestellt ist, indem hier die in den Grundkörper 2c eingelassene Ausnehmung mit einem endseitigen Zylinderabschnitt 22 versehen ist, der einen größeren Durchmesser als die restliche Ausnehmung aufweist. In dieser Ausnehmung ist ein Dübel 14, 14a einsetzbar, der in dem einseitigen Zylinderabschnitt 22 gehalten ist.

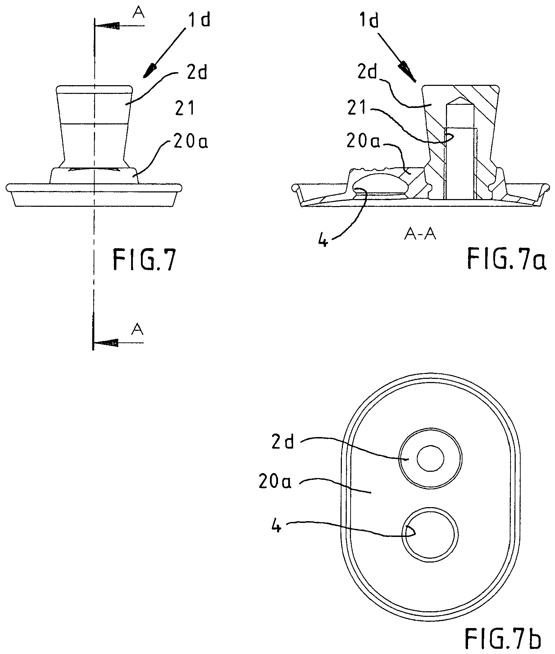

Das in den Figuren 7 bis 7b dargestellte Ausführungsbeispiel einer Halterung 1d unterscheidet sich von den in den Figuren 6 bis 6c dargestellten Ausführungsbeispielen dadurch, dass hier das Fußteil 20a oval ausgebildet ist und die Hinterschneidung 4 seitlich neben dem Grundkörper 2d angeordnet ist. Das Fußteil 20a ist auch bei diesem Ausführungsbeispiel aus einem elastischen Material, beispielsweise Gummi oder auch aus einem elastischen Kunststoff gefertigt und mit dem Grundkörper 2d fest verbunden Der Grundkörper 2d ist bei dieser Ausführungsform bis an die hier nicht dargestellte Schalung heranreichend ausgebildet, so dass dieser Grundkörper 2d nach dem Betoniervorgang bis an die Oberfläche des Betons reicht. Auch dieser Grundkörper 2d ist mit einem Gewinde 21 versehen, in das als Halter eine Schraube einschraubbar ist. Während des Eingießens ist die Gewindeöffnung mit beispielsweise einer Schutzfolie abdeckbar.

Abschließend wird darauf hingewiesen, dass beliebige Kombinationen der dargestellten und beschrieben Ausführungsbeispiele im Rahmen der Erfindung umsetzbar sind.

### Bezugszeichenliste:

- 1, 1a, 1b, 1c, 1d: Halterung
- 2, 2a, 2b, 2c, 2d: Grundkörper
- 3, 3a, 3b: Hohlklemmkörper
- 4: Hinterschneidung
- 5, 5a, 5b: Schalungsknopf
- 6: Schalung
- 7,7a, 7b: Außenfläche
- 8, 8a: Innenraum
- 9, 9a: Klemmbügel
- 10: Grundplatte
- 11: Hohlraum
- 12, 12a: Widerhacken
- 13, 13a: Profilierung
- 14, 14a: Dübel
- 15: Betonelement
- 16: Träger
- 17, 17a: Abdeckkappe
- 18: Absatz
- 19: Abflachung
- 20, 20a: Fußteil
- 21: Gewinde
- 22: Zylinderabschnitt

## Patentansprüche

1. Halterung (1, 1a, 1b, 1c, 1d), insbesondere zur Befestigung von einer Auskleidung, zum zumindest teilweisen Eingießen in ein unter Verwendung einer Schalung (6) gegossenes Betonelement (15), wobei die Halterung (1, 1a, 1b, 1c, 1d) mit einer Außenfläche (7, 7a, 7b) auf die zu der Schalung (6) weisenden Oberfläche des Betonelements (15) ausgerichtet ist, insbesondere zur Anwendung im Tunnelbau und Ingenieurbau, wobei eine Befestigungsvorrichtung zur lösbaren Befestigung der Halterung (1, 1a, 1b, 1c, 1d) an der Schalung (6) vorgesehen ist, wobei die Befestigungsvorrichtung ein mit der Schalung (6) zusammenwirkendes Halteteil (5) aufweist, wobei an der Außenfläche (7, 7a, 7b) der Halterung (1, 1a, 1b, 1c, 1d) ein Klemmelement angeordnet ist, und wobei das Klemmelement mit dem Halteteil (5) zusammenwirkt, **dadurch gekennzeichnet, dass** das Klemmelement als eine in die Halterung (1, 1a, 1b, 1c, 1d) eingelassene Hinterschneidung (4) ausgebildet ist.

2. Halterung (1, 1a, 1b, 1c, 1d) nach Anspruch 1,
**dadurch gekennzeichnet, dass** das Halteteil ein Schalungsknopf (5, 5a, 5b) ist und dass der Schalungsknopf (5, 5a, 5b) mittels eines Haltestifts an der Schalung (6) befestigbar ist.

3. Halterung (1, 1a, 1b, 1c, 1d) nach Anspruch 1,
**dadurch gekennzeichnet, dass** das Halteteil ein Schalungsknopf (5, 5a, 5b) ist und dass der Schalungsknopf (5, 5a, 5b) an der Schalung (6) anschweißbar ist.

4. Halterung (1, 1a, 1b, 1c, 1d) nach einem der vorherigen Ansprüche,
**dadurch gekennzeichnet, dass** die Halterung (1, 1a, 1b, 1c, 1d) einen pilzförmigen Grundkörper (2, 2a, 2b, 2c, 2d) und einen mit dem Grundkörper (2, 2a, 2b, 2c, 2d) zusammenwirkenden Hohlklemmkörper (3, 3a, 3b) aufweist.

5. Halterung (1, 1a, 1b, 1c, 1d) nach Anspruch 4,
**dadurch gekennzeichnet, dass** der Hohlklemmkörper (3a) einen einen Hohlraum (11) bildenden Träger (16) mit zumindest einem in dem Hohlraum (11) angeordneten Klemmbügel (9a) aufweist.

6. Halterung (1, 1a, 1b, 1c, 1d) nach Anspruch 4,
**dadurch gekennzeichnet, dass** zumindest zwei Klemmbügel (9) einstückig mit einer Grundplatte (10) des Hohlklemmkörpers (3) ausgebildet sind und dass die Klemmbügel (9) zu der Grundplatte (10) verschwenkbar sind.

7. Halterung (1, 1a, 1b, 1c, 1d) nach Anspruch 6
**dadurch gekennzeichnet, dass** die Klemmbügel (9) zur Bildung des Hohlraums (11) des Hohlklemmkörpers (3) verschwenkbar sind und dass der so gebildete Hohlklemmkörper (3) zumindest teilweise in eine zylinderförmige Ausnehmung des pilzförmigen Grundkörpers (2, 2a, 2b,) einsetzbar ist.

8. Halterung (1, 1a, 1b, 1c, 1d) nach einem der vorherigen Ansprüche,
**dadurch gekennzeichnet, dass** durch die Außenfläche (7, 7a, 7b) hindurch ein Halter in einen Hohlraum (11) einsetzbar ist.

9. Halterung (1, 1a, 1b, 1c, 1d) nach Anspruch 8,
**dadurch gekennzeichnet, dass** der Halter ein mit einer Rondelle zusammenwirkender Dübel (14, 14a) ist.

10. Betonelement (15) zur Anwendung im Tunnelbau oder Ingenieurbau, wobei das Betonelement (15) unter Verwendung von zumindest einer Schalung (6) gegossen ist,
**dadurch gekennzeichnet, dass** eine Halterung (1, 1a, 1b, 1c, 1d) nach einem der vorherigen Ansprüche vor dem Betoniervorgang an der Schalung (6) lösbar befestigt ist.

## Claims

1. Retaining arrangement (1, 1a, 1b, 1c, 1d), in particular for fastening a lining, for at least partially casting into a concrete element (15) which is cast using a formwork (6), wherein the retaining arrangement (1, 1a, 1b, 1c, 1d) has an outer surface (7, 7a, 7b) aligned with that surface of the concrete element (15) which is facing towards the formwork (6), in particular for use in tunnelling and engineering, wherein a fastening device for fastening the retaining arrangement (1, 1a, 1b, 1c, 1d) in a releasable manner on the formwork (6) is provided, wherein the fastening device has a retaining part (5) which interacts with the formwork (6), wherein a clamping element is arranged on the outer surface (7, 7a, 7b) of the retaining arrangement (1, 1a, 1b, 1c, 1d), and wherein the clamping element interacts with the retaining part (5),
**characterized in that** the clamping element is designed in the form of an undercut (4) which is incorporated in the retaining arrangement (1, 1a, 1b, 1c, 1d).

2. Retaining arrangement (1, 1a, 1b, 1c, 1d) according to Claim 1,
**characterized in that** the retaining part is a formwork protuberance (5, 5a, 5b), and **in that** the formwork protuberance (5, 5a, 5b) can be fastened on the formwork (6) by means of a retaining pin.

3. Retaining arrangement (1, 1a, 1b, 1c, 1d) according to Claim 1,
**characterized in that** the retaining part is a formwork protuberance (5, 5a, 5b), and **in that** the formwork protuberance (5, 5a, 5b) can be welded to the formwork (6).

4. Retaining arrangement (1, 1a, 1b, 1c, 1d) according to one of the preceding claims,
**characterized in that** the retaining arrangement (1, 1a, 1b, 1c, 1d) has a mushroom-shaped basic body (2, 2a, 2b, 2c, 2d) and a hollow clamping body (3, 3a, 3b), which interacts with the basic body (2, 2a, 2b, 2c, 2d).

5. Retaining arrangement (1, 1a, 1b, 1c, 1d) according to Claim 4,
**characterized in that** the hollow clamping body (3a) has a carrier (16), which forms a cavity (11) and has at least one clamping bracket (9a) arranged in the cavity (11).

6. Retaining arrangement (1, 1a, 1b, 1c, 1d) according to Claim 4,
**characterized in that** at least two clamping brackets (9) are formed in one piece with a base plate (10) of the hollow clamping body (3), and **in that** the clamping brackets (9) can be pivoted in relation to the base plate (10).

7. Retaining arrangement (1, 1a, 1b, 1c, 1d) according to Claim 6,
**characterized in that** the clamping brackets (9) can be pivoted in order to form the cavity (11) of the hollow clamping body (3), and **in that** the hollow clamping body (3) formed in this way can be inserted, at least in part, into a cylindrical recess of the mushroom-shaped basic body (2, 2a, 2b,).

8. Retaining arrangement (1, 1a, 1b, 1c, 1d) according to one of the preceding claims,
**characterized in that** a holder can be inserted into a cavity (11) through the outer surface (7, 7a, 7b).

9. Retaining arrangement (1, 1a, 1b, 1c, 1d) according to Claim 8,
**characterized in that** the holder is an anchor (14, 14a) which interacts with a round cap.

10. Concrete element (15) for use in tunnelling or engineering, wherein the concrete element (15) is cast using at least one formwork (6),
**characterized in that** a retaining arrangement (1, 1a, 1b, 1c, 1d) according to one of the preceding claims is fastened in a releasable manner on the formwork (6) prior to the concreting operation.

## Revendications

1. Système de retenue (1, 1a, 1b, 1c, 1d), en particulier pour la fixation d'un habillage, destiné à être coulé au moins en partie dans un élément en béton (15) coulé en utilisant un coffrage (6), le système de retenue (1, 1a, 1b, 1c, 1d) étant orienté avec une surface extérieure (7, 7a, 7b) vers la surface de l'élément en béton (15) tournée vers le coffrage (6), en particulier pour l'utilisation dans la construction de tunnels et le génie civil, un dispositif de fixation pour la fixation amovible du système de retenue (1, 1a, 1b, 1c, 1d) sur le coffrage (6) étant prévu, le dispositif de fixation présentant une partie de retenue (5) coopérant avec le coffrage (6), un élément de serrage étant disposé sur la surface extérieure (7, 7a, 7b) du système de retenue (1, 1a, 1b, 1c, 1d), et l'élément de serrage coopérant avec la partie de retenue (5),
**caractérisé en ce que** l'élément de serrage est réalisé sous forme de contre-dépouille (4) réalisée dans le système de retenue (1, 1a, 1b, 1c, 1d).

2. Système de retenue (1, 1a, 1b, 1c, 1d) selon la revendication 1,
**caractérisé en ce que** la partie de retenue est un bouton de coffrage (5, 5a, 5b) et **en ce que** le bouton de coffrage (5, 5a, 5b) peut être fixé au coffrage (6) au moyen d'une goupille de retenue.

3. Système de retenue (1, 1a, 1b, 1c, 1d) selon la revendication 1,
**caractérisé en ce que** la partie de retenue est un bouton de coffrage (5, 5a, 5b) et **en ce que** le bouton de coffrage (5, 5a, 5b) peut être soudé au coffrage (6).

4. Système de retenue (1, 1a, 1b, 1c, 1d) selon l'une quelconque des revendications précédentes,
**caractérisé en ce que** le système de retenue (1, 1a, 1b, 1c, 1d) présente un corps de base en forme de champignon (2, 2a, 2b, 2c, 2d) et un corps de serrage creux (3, 3a, 3b) coopérant avec le corps de base (2, 2a, 2b, 2c, 2d).

5. Système de retenue (1, 1a, 1b, 1c, 1d) selon la revendication 4,
**caractérisé en ce que** le corps de serrage creux (3a) présente un support (16) formant une cavité (11) avec au moins un étrier de serrage (9a) disposé dans la cavité (11).

6. Système de retenue (1, 1a, 1b, 1c, 1d) selon la revendication 4,
**caractérisé en ce qu'**au moins deux étriers de serrage (9) sont réalisés d'une seule pièce avec une plaque de base (10) du corps de serrage creux (3) et **en ce que** les étriers de serrage (9) peuvent être pivotés par rapport à la plaque de base (10).

7. Système de retenue (1, 1a, 1b, 1c, 1d) selon la revendication 6,
**caractérisé en ce que** les étriers de serrage (9) peuvent pivoter pour former la cavité (11) du corps de serrage creux (3) et **en ce que** le corps de serrage creux ainsi formé (3) peut être inséré au moins en partie dans un évidement de forme cylindrique du corps de base en forme de champignon (2, 2a, 2b,).

8. Système de retenue (1, 1a, 1b, 1c, 1d) selon l'une quelconque des revendications précédentes,
**caractérisé en ce qu'**un élément de retenue peut être inséré dans une cavité (11) à travers la surface extérieure (7, 7a, 7b).

9. Système de retenue (1, 1a, 1b, 1c, 1d) selon la revendication 8,
**caractérisé en ce que** l'élément de retenue est une cheville (14, 14a) coopérant avec une rondelle.

10. Élément en béton (15) destiné à être utilisé dans la construction de tunnels ou dans le génie civil, l'élément en béton (15) étant coulé en utilisant au moins un coffrage (6),
**caractérisé en ce qu'**un système de retenue (1, 1a, 1b, 1c, 1d) selon l'une quelconque des revendications précédentes est fixé de manière amovible au coffrage (6) avant l'opération de bétonnage.
